# EUROPEAN PATENT APPLICATION

(11) **EP 3 258 363 A1**
(43) Date of publication of application: **20.12.2017**
(21) Application number: 16748543.2
(22) Date of filing: 07.01.2016
(51) Int. Cl.: G06F 3/0484

(54) **METHOD AND DEVICE FOR DYNAMICALLY SWITCHING KEYBOARD BACKGROUND**

(30) Priority: 13.02.2015 CN 201510078845
(71) Applicant: Shanghai Chule (CooTek) Information Technology Co., Ltd, Shanghai 200233 (CN)
(72) Inventor: XIONG, Jiannan, Shanghai 200233 (CN); ZHOU, Zhaowen, Shanghai 200233 (CN); LIN, Ni, Shanghai 200233 (CN); XIE, Haichao, Shanghai 200233 (CN); CHEN, Xianmou, Shanghai 200233 (CN); MEI, Yuan, Shanghai 200233 (CN); WANG, Wenjuan, Shanghai 200233 (CN)
(74) Representative: Kolster Oy Ab
(86) International application number: PCT/CN2016/070375
(87) International publication number: WO 2016/127742

(57) **Abstract**

A method and a device for dynamically switching a keyboard background. The method comprises: listening to an associated parameter related to switching of keyboard background, and determining whether to trigger dynamic switching of the keyboard background (S1); and when dynamic switching of the keyboard background is triggered, acquiring, from a background packet, pictures that respectively correspond to a specified view and that are not used, and replacing a currently used picture in the specified view (S2). Some associated parameters related to switching of a keyboard background are set, and these associated parameters are listened to, so that switching can be performed between set background pictures, so as to provide more personalized experience for a user.

## Description

### TECHNICAL FIELD

The present invention relates to electronic products and, in particular, to a method and an device for dynamically switching a keyboard background of a virtual keyboard on an electronic device.

### BACKGROUND

Nowadays, with the popularity of smartphones, tablets and other touchscreen electronic devices, the touchscreen technology has become increasingly familiar to us. These touchscreen electronic devices are usually equipped with virtual keyboards for users to perform human-computer interactions such as typing or selection. As a typing tool, it is important for a virtual keyboard to allow accurate and speed typing. However, when it is invoked in the touchscreen electronic device, the virtual keyboard itself takes up at least one third of the screen area, so its background picture would be unignorably to the user.

Conventional virtual keyboards typically employ a default picture as the background or provide a number of static pictures for the users to choose one therefrom as the background. However, apparently, this could not satisfy the users' need for personalization.

### SUMMARY

The present invention is aim to provide a method and an apparatus for dynamically switching a keyboard background, so as to meet the users' need for a personalized keyboard background with fewer resources.

To this end, some embodiments of the present invention provide a method for dynamically switching a keyboard background, comprising: monitoring a parameter associated with switching the keyboard background and determining whether to trigger a dynamic switching of the keyboard background; and when when it is determined to trigger a dynamic switching of the keyboard background, obtaining a unused picture corresponding to a designated view from respective background packages and replacing a picture being currently used in the designated view with said unused picture.

According to an aspect of the present invention, the parameter associated with switching the keyboard background may include a system parameter indicating a time or condition for dynamically switching the keyboard background or a user action. The system parameter may include a system time, or the type of an application for which the keyboard is currently invoked, or the number of times the keyboard has been invoked. The user action may include: a particular motion, or a motion made on a particular location, or a motion made on a particular location in a particular application.

According to another aspect of the present invention, the designated view may be a parent view adapted to carry a keyboard view and a menu/candidate view. Deploying the dynamically switchable background picture in the parent view and transparentizing the keyboard view and menu/candidate view in the parent view allow that only one picture for the menu/candidate view is deployed all the background packages. This results in great reductions in required resources and increased efficiency. In addition, the pictures in the background packages may be adapted to be displayed in the parent view.

According to a further aspect of the present invention, the present invention also relates to a device for dynamically switching a keyboard background. The device includes: monitoring device, adapted to monitor a parameter associated with switching the keyboard background; triggering device, adapted to determine whether to trigger a dynamic switching of the keyboard background based on the associated parameter obtained by the monitoring device and send out a triggering instruction when it is determined to trigger a dynamic switching of the keyboard background; replacement device, adapted to receive the triggering instruction from the triggering device, obtain unused pictures corresponding to a designated view from respective background packages and replace a picture being currently used in the designated view with one of the unused pictures; and storage device, adapted to store the background packages.

Compared with the prior art, a parameter associated with switching the keyboard background is configured and monitored in accordance with the present invention so as to allow switching the background between several preset background pictures and thereby providing the user with better personalization experience. In addition, according to the present invention, a dynamically switchable background picture is deployed in the parent view and the keyboard view and menu/candidate view carryied in the parent view are transparentized. In this way, full use of the space of the parent view is enabled and the number of necessary pictures in the background packages is reduced by one half, with only one picture for the menu/candidate view being required for all the background packages. This results in signwhenicant reductions in the storage burden and workload.

### BRIEF DESCRIPTION OF THE DRAWINGS

Fig. 1 is a structural block diagram of an apparatus in which a keyboard background on a touchscreen electronic device can be dynamically switched in accordance with the present invention.
Fig. 2 is a method for dynamically switching a keyboard background according to an embodiment of the present invention.
Fig. 3 is a diagram schematically showing a dynamic switching of a keyboard background triggered upon detection of a particular motion made by a user at a particular location in accordance with an embodiment of the present invention.
Fig. 4 is a diagram schematically showing sending an instruction or message for switching a keyboard background to a target device from another device in accordance with an embodiment of the present invention.
Fig. 5 shows a flowchart of a step for splitting a candidate word in a method for inputting text to a touch screen in accordance with the present invention.
Fig. 6 is a schematic of a device for dynamically switching a keyboard background according to an embodiment of the present invention.
Fig. 7 is a schematic of a device for dynamically switching a keyboard background according to another embodiment of the present invention.

### DETAILED DESCRIPTION

Before describing embodiments of the present invention in detail, it should be noted that these embodiments are primarily directed to combinations of method steps and device components for dynamically switching a background of a virtual keyboard used in a touchscreen electronic device. These device components and method steps are shown at proper positions of the accompanying drawings and indicated at conventional numerals in such a manner that only their details related to understanding the embodiments of the invention are presented in order to avoid obscuring the present disclosure by the details apparent to those of ordinary skill in the art who benefit from the present invention.

As used herein, the terms "first", "second" and so on are intended only to distinguish one entity or action from another without necessarily requiring or implying that these entities actually have such a relationship or that these actions are actually carried out in such an order. In addition, the terms "comprise", "include" or any other variation thereof are intended to cover a non-exclusive inclusion. As such, a process, method, article, or apparatus that comprises a list of features is not necessarily limited only to those features but may include other features not expressly listed or inherent to such process, method, article, or apparatus.

The foregoing objects, features and advantages of the present invention will become more apparent from the following detailed description of several specwhenic embodiments which is to be read in conjunction with the accompanying drawings.

Herein, the term "view" is defined in a broad sense and includes a way of viewing a picture or text. In embodiments of the present invention, as a default, a view can be implemented by a virtual table containing named columns and rows, with data in the columns and rows configured to freely define tables referenced during a query of the view and dynamically generate any input component with a definite area. Those of ordinary skill in the art will appreciate that the present invention is not limited to any particular implementation of a view.

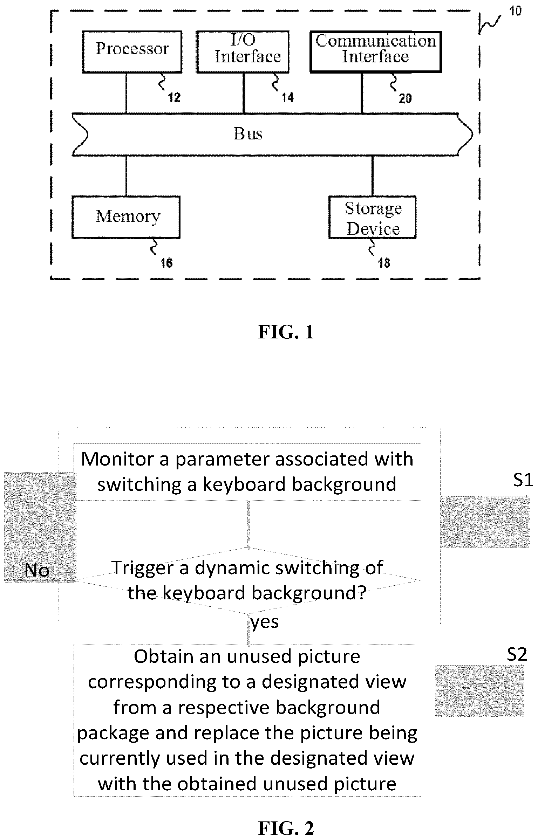

Reference is now made to Fig. 1, a structural block diagram of a device in which a keyboard background on a touchscreen electronic device can be dynamically switched in accordance with the present invention. The device 10 may include a processor 12, an interactive interface 14, a memory 16, a storage device 18, a communication interface 20 and a data bus for data exchange between these components.

The processor 12 may be a central processing unit (CPU), a graphics processing unit (GPU) or another suitable information processing device. Depending on the type of hardware employed, the processor 12 may include one or more printed circuit boards and/or one or more microprocessors. The processor 12 may execute computer program instructions to implement a plurality of methods described in detail below.

The interactive interface 14 may receive user input data and output data. The interactive interface 14 may include a touchscreen display adapted to display a plurality of views and background pictures deployed in the views.

The memory 16 may include a random access memory (RAM) and/or a read only memory (ROM). The processor 12 may store computer program instructions in the memory 16 and read necessary computer program instructions from memory 16 and execute them. For example, the memory 16 may store one or more software programs. Further, the memory 16 may store the entire or part of a software program to be executed by the processor 12.

In specwhenic embodiments, the storage device 18 may be adapted to store mass data such as, for example, background packages and configuration parameters used to dynamically switch a keyboard background. The storage device 18 may also store software programs executable by one or more processors 12. The storage device 18 may include one or more magnetic storage media such as hard drives, one or more optical storage media such as compact discs (CDs), recordable CDs (CD-Rs), rewritable CDs (CD ± RWs), DVDs, recordable DVD (DVD±Rs) or Blu-ray DVDs, one or more semiconductor storage media such as flash memories, SD cards or memory sticks, or other suitable computer-readable media. Furthermore, the storage device 18 may be deployed either locally or on a cloud server.

Referring to Fig. 2, a method for dynamically switching a keyboard background in accordance with one embodiment of the present invention includes:
in step S1, monitoring a parameter associated with switching the keyboard background and determining whether to trigger a switching of the keyboard background; and
in step S2, when it is determined to trigger a dynamic switching of the keyboard background, obtaining unused pictures corresponding to a designated view from respective background packages and replacing a picture being currently used in the designated view with one of the unused pictures.

In particular, the parameter associated with the keyboard background is configured to indicate a timing or condition for triggering a dynamic switching of the keyboard background. It may include a system parameter or a user action. The system parameter may include a system time, or the type of an application for which the keyboard is currently invoked, or the number of times the keyboard has been invoked, etc. The user action may include a specwhenic motion such as, for example, drawing a circle or swiping to the left, to the right, upward or downward on the screen with a finger or contact device, or holding the electronic device with a hand and turning it from side to side or shaking it, or manipulating, for example, tapping, pressing or making another motion on, a specwhenic location of the screen with a finger or contact device. In addition, the system parameter may be combined with the user action for, for example, a particular application or a particular location.

Step S1 may further include determining whether a condition for triggering a dynamic switching is satisfied based on the system parameter or user action.

In one embodiment, the determination step may further include: comparing a monitored system time T1 with a time T2 at which the last switching of the keyboard background occurred and determining whether the dwhenference between them exceeds a predetermined time interval Tth. When the determination is positive, a switching is triggered. The time interval may be set beforehand by the user in accordance with his/her preferences. For example, a switching of the keyboard background may be triggered every 5 minutes, every 4 hours, every 1 day or every 1 week.

In another embodiment, the number of times the keyboard has been invoked may be checked to determine whether it is greater than a predetermined threshold value. When the determination is positive, a switching is triggered. Specwhenically, the determination step may further include: recording the number of times the keyboard has been invoked and triggering a switching of the keyboard background when the number exceeds the predetermined threshold value. The number of times the keyboard has been invoked may be counted so that, for instance, when it reaches the predetermined threshold value of 20, and when the keyboard is then again invoked, i.e., for the 21^{st} time, a switching of the keyboard background is triggered during its invocation. Further, after a switching of the keyboard background is triggered, the recorded number of times the keyboard has been invoked may be reset to zero.

In a further embodiment, the determination step may include: checking an application for which the keyboard is invoked and triggering a switching of the keyboard background when the application is a pre-designated one and activated. For example, a switching of the keyboard background may be triggered when it is detected that the SMS service or Twitter that invokes the keyboard is activated. Alternatively, it may also be configured that, when a certain application, for example, a mail service, is activated, the keyboard background is not switched. Specifically, the current location of a focus may be monitored, and when it enters an input field of an application, invocation of the keyboard may be triggered and the type of the application may be obtained based on the current location of the focus.

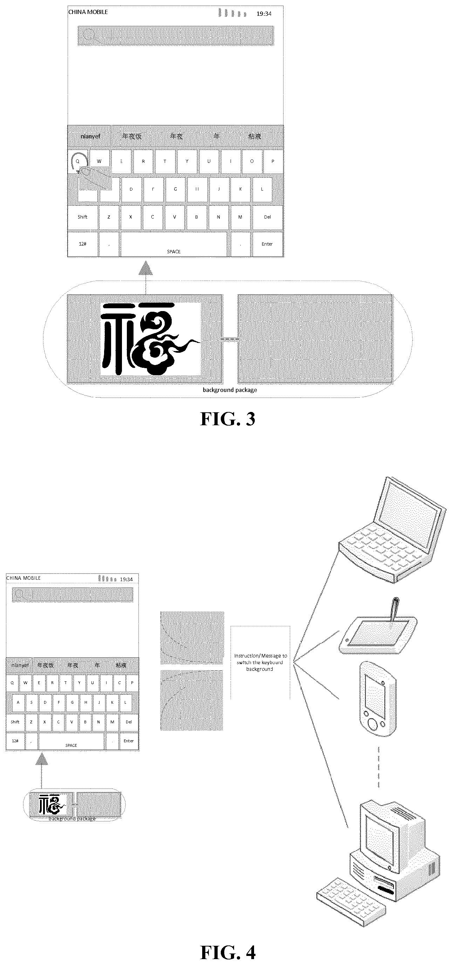

In a further embodiment, the determination step may further include: detecting a location currently manipulated by the user or a motion currently made thereby and determining whether the location or motion is a predefined triggering location or motion. For example, the user can set a particular motion for triggering a dynamic switching of the keyboard background, such as, for example, drawing a circle, a square, a triangle, a self-defined shape or another specific shape on the screen with a finger or contact device, or swiping to the left, to the right, upward or downward on the screen, or holding the electronic device with a hand and flipping or shaking it. The predefined triggering location may include the location of a space key or that of another designated key in the keyboard. Here, since a manipulation corresponding to a designated key is usually associated with a character corresponding to the key, in practical implementations, when the location of a designated key is configured as a trigger, it is generally combined with a particular motion apart from tapping, pressing or swiping. For example, with reference to Fig. 3, a dynamic switching of the keyboard background may be triggered when it is detected that a particular motion such as drawing a circle, triangle or the like is made at the location of the key "Q" (the first character of the Pinyin of the Chinese character " 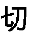 " which means switching).

In a further embodiment, monitoring the parameter associated with the keyboard background may further include monitoring received information. For example, referring to Fig. 4, the user may remotely cause a dynamic switching of the keyboard background by means of another device. To this end, the user may send an instruction for this purpose from a computer to the target device in which a switching is to be caused. Alternatively, the user may utilize his/her social account to establish an association between a device being currently manipulated and the target device and send a remote instruction for causing a switching. Alternatively, the user may send a message such as a SMS message to the target device from another person's communication terminal such as a mobile phone. The system may analyze the received message or instruction so that, for example, when an instruction for the purpose is detected, the switching may be triggered.

Unlike the conventional manual practice, in some embodiments of the present invention, a parameter associated with causing a switching of the keyboard background may be configured and monitored so as to switch the background between several preset background pictures and thereby provide the user with better personalization experience. For example, the keyboard background can be automatically switched at a particular time, or in a particular time interval, or when the number of times the keyboard has been invoked reaches a predetermined threshold value or when a particular application is activated and invokes the keyboard. As a result, the background picture of the keyboard can be switched without requiring additional user interactions.

According to another embodiment of the method for dynamically switching a keyboard background, step S1 may further include: customizing the associated parameter. Specifically, the user may configure the time or condition for triggering a dynamic switching based on his/her preferences. Alternatively, the associated parameter may be a default parameter which can be modified by the user to trigger a dynamic switching in a more desirable way.

According to a further embodiment of the method, step S1 may further include: storing the associated parameter and, after the keyboard is reset, restoring settings for dynamically switching the keyboard background based on the stored associated parameter. The associated parameter may be either stored locally or in a cloud server. In the latter case, the step may further include uploading the associated parameter to the cloud server and, when it is needed to restore the configuration of the keyboard, downloading the associated parameter to the local device.

Subsequently, after a trigger for switching the keyboard background is detected, step S2 is performed.

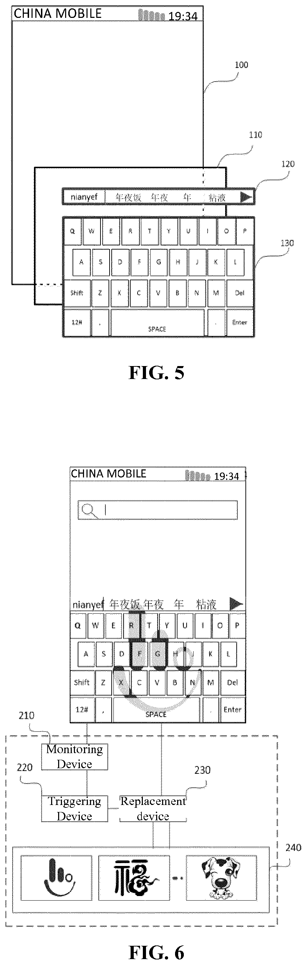

Invocation of the keyboard typically involves constructing a plurality of views. With reference to Fig. 5, for example, in order to display the keyboard on a screen 100, at least a parent view 110, as well as a menu/candidate view 120 and a keyboard view 130 carried in the parent view 110, is constructed. Conventionally, the parent view 110 is adapted to carry the menu/candidate view 120 and the keyboard view 130. As the parent view 110 is not intended to be displayed to or noticed by the user, it is configured to appear in a default color such as black or white. The keyboard visible by the user is deployed in the keyboard view 130. The menu/candidate view 120 is adapted to display a menu containing options or a list of candidate words for the user to pick from. In fact, the keyboard view 130 may further include a plurality of sub-views (not shown) adapted to guide the user's input. In the conventional techniques, every time the keyboard background is switched, the user is required to first choose and confirm a background picture to be displayed. Only after that, will the background picture be updated to the keyboard view 130 and the menu/candidate view 120, effectuating a switching of the background. In fact, in order to maintain the consistency of the background picture, each background package chosen by the user contains two pictures, one of which is for the keyboard view 130 and the other is for the menu/candidate view 120. In such conventional techniques, in order to enable a dynamic switching of the keyboard background, it is necessary for each background package to contain one picture for the keyboard view 130 and another picture for the menu/candidate view 120. As such, a set of N dynamic background packages require actually storing 2*N pictures (N for the keyboard view 130, and the remaining N for the menu/candidate view 120). This leads to increases in both the storage burden and workload. In contrast, according to the present invention, full use of the space of the parent view 110 is enabled by deploying the background picture in the parent view 110 and processing the menu/candidate view 120 and the keyboard view 130. As a result, the number of necessary pictures in the background packages is reduced by one half, resulting in significantly improved user experience.

According to an embodiment of the present invention, step S2 may further include: obtaining a parent view of the keyboard and replacing a picture currently used in the parent view with an unused picture in a background package corresponding to the parent view.

Step S2 may further include: configuring the pictures in the background packages so that they are adapted to be displayed in the parent view. For example, pictures in background packages are typically uniformly sized, while the size of the parent view may vary with a resolution of the used screen. For example, the size of the parent view when it is displayed on a 320x480 screen is significantly different from that when it is displayed on a 1080x1920 screen. Thus, in order to ensure high quality of the displayed picture, it is necessary to adjust the size of the pictures in the background packages according to that of the parent view.

In order to make the conventionally invisible background picture in the parent view able to be seen by the user, step S2 may further include: transparentizing the keyboard view and the menu/candidate view in the parent view. In this way, the user will not be affected when the background picture in the parent view is switched to another.

In one embodiment, the transparentization may include: configuring settings of the keyboard and menu/candidate views so that they each gain a certain degree of transparency. For example, a transparentized color may be represented by a hexadecimal value, for example, in the format of "aabbggrr", where "aa" indicates the transparency; "bb", the blueness, "gg", the greenness, and "rr", the redness. In addition, an "aa" value of "00" (the decimal 0) device that the color is completely transparentized, while an "aa" value of "ff" (the decimal 255) indicates that the color is not transparentized at all. Setting the value indicating the degree of transparency, i.e., "aa", for example, in the range of "00" to "7f" will make the keyboard and menu/candidate views appear transparent or translucent.

In another embodiment, the transparentization may include: deploying a picture with a preset degree of transparency in each of the keyboard view and the menu/candidate view. According to this embodiment, no matter how many background packages are contained in a single set of background packages, only one common picture rather than respective pictures is needed for each of the keyboard view and the menu/candidate view, achieving a mitigated storage burden and increased efficiency.

In addition, replacing the picture in step S2 may further include: marking each picture in the background packages, upon detection of a trigger for dynamically switching the keyboard background, comparing the current picture with all the pictures in the background packages and replacing the current picture with one of the other pictures. In another embodiment, replacing the picture in step S2 may include: marking only the current picture, and upon detection of a trigger for dynamically switching the keyboard background, replacing the current picture with an unmarked picture in the background packages.

Referring to Fig. 6, an apparatus for dynamically switching a keyboard background according to another embodiment of the present invention comprises: monitoring device 210, adapted to monitor a parameter associated with switching the keyboard background; triggering device 220, adapted to determine whether to trigger a dynamic switching of the keyboard background based on the associated parameter obtained by the monitoring device 210 and send out a triggering instruction when it is determined to trigger a dynamic switching of the keyboard background; storage device 240, adapted to store background packages; and replacement device230, adapted to receive a triggering instruction from the triggering device 220, obtain unused pictures corresponding to a designated view from background packages in the storage device 240 and replace a picture being currently used in the designated view with one of the unused pictures. The storage device 240 may be deployed either locally or on a cloud server.

The designated view may be a parent view adapted to carry a keyboard view and a menu/candidate view.

Additionally, the monitoring device 210 may also be adapted to obtain a system parameter indicative of a timing or condition for triggering a dynamic switching of the keyboard background or a user action. The system parameter may be a system time, or an application for which the keyboard is currently invoked, or the number of times the keyboard has been invoked. The user action may be a particular motion currently made by the user or a motion made by the user at a particular location. The system parameter may also be combined with the user action for, for example, a particular application or a specific location. The storage device 240 may be further adapted to store previously recorded associated parameters, for example, the system time at which the previous dynamic switching of the keyboard background was triggered, or the number of times the keyboard has been invoked, or user-defined settings for particular motions or locations.

The replacement device 230 may further include a background picture configuration unit adapted to configure the pictures in the background packages so that they are adapted to be displayed in the parent view. Specifically, the background picture configuration unit may obtain a resolution of the device screen and configured configure the pictures in the background packages based on the obtain resolution.

The replacement device230 may further include a transparentization unit adapted to transparentize the keyboard view and menu/candidate view in the parent view. Specifically, the transparentization unit may be adapted to configure display settings of the keyboard view and menu/candidate view so that they each have a predetermined degree of transparency or deploying a picture with a preset degree of transparency in each of the keyboard view and menu/candidate view.

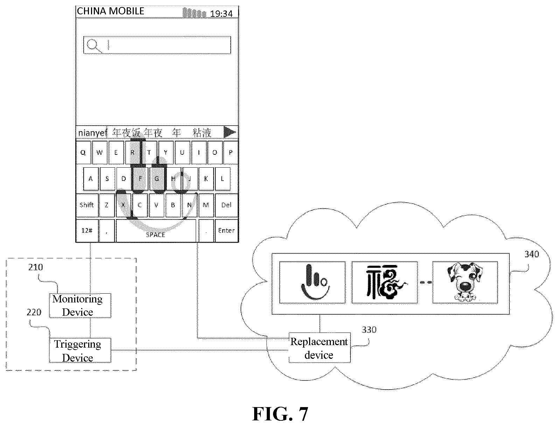

Referring to Fig. 7, according to another embodiment of the present invention, when the triggering device 220 detects a need for dynamically switching the keyboard background, a triggering instruction may be sent to the replacement device 33 that is deployed on a remote server. After the replacement device 330 receives the triggering instruction from the triggering device 220, an unused picture corresponding to the parent view is obtained from the storage device 340 to replace the picture currently used in the parent view.

Further, referring to Fig. 6, the storage device 240 may be further adapted to store associated parameters defined by the user. During the definition of an associated parameter by the user, the monitoring device 210 receives an input of the user and the triggering device 220 transmits a user-defined instruction to the replacement device 230 which, in turn, stores the user-defined associated parameter in the storage device 240. Similarly, referring to Fig. 7, the user-defined associated parameters may also be stored in storage device 340 deployed on a cloud server.

Furthermore, the user-defined associated parameters stored in the storage device 340 may be downloaded to the local device and used to restore user-defined settings for the local device after it is refreshed or rooted.

Compared with the prior art, a parameter associated with switching the keyboard background is configured and monitored in accordance with the present invention so as to allow switching the background between several preset background pictures and thereby providing the user with better personalization experience. In addition, according to the present invention, a dynamically switchable background picture is deployed in the parent view and the keyboard view and menu/candidate view carried in the parent view are transparentized. In this way, full use of the space of the parent view is enabled and the number of necessary pictures in the background packages is reduced by one half, with only one picture for the menu/candidate view being required for all the background packages. This results in significant reductions in the storage burden and workload.

Although the present invention has been described above with reference to specific embodiments, it is apparent that various modifications and changes may be made without departing from the spirit and scope of the invention. Accordingly, the specification and drawings are to be considered as illustrative and not restrictive. It is noted that many modifications and additions may be made by those skilled in the art without departing from the teachings of the present invention, and such modifications and additions are intended to be included within the scope of the present invention. All equivalent changes such as alternations, modifications and variations made in light of the above disclosure by those familiar with the art without departing from the spirit and scope of the invention are all considered as equivalent embodiments of the present invention. Accordingly, all equivalent changes such as alternations, modifications and variations made to the disclosed embodiments in accordance with the essential principles of the present invention fall within the scope of the invention.

Further, all the nouns, object titles, terms and expressions mentioned throughout this application (including but not limited to the claims, specification, drawings, abstract and selected drawing sections) are not limited to their singular senses, but also covers the plural senses when appropriate as well as any other possible sense subject to expressional limitations of the language used. Accordingly, expressional limitations of the language used in the original application documents have no impact on the scope of their translations in any other language.

## Claims

1. A method for dynamically switching a keyboard background, comprising:
monitoring a parameter associated with switching the keyboard background and determining whether to trigger a dynamic switching of the keyboard background; and
when it is determined to trigger a dynamic switching of the keyboard background, obtaining an unused picture corresponding to a designated view from a respective background package and replacing a picture being currently used in the designated view with the obtained unused picture.

2. The method according to claim 1, **characterized in that**, the parameter associated with switching the keyboard background comprising a system parameter or a user action indicating a time or a condition for triggering a dynamical switching the keyboard background.

3. The method according to claim 1 or 2, **characterized in that**, the designated view is a parent view adapted to carry a keyboard view and a menu/candidate view.

4. The method according to claim 3, **characterized in that**, further comprising: transparentizing the keyboard view and menu/candidate view carried in the parent view.

5. The method according to claim 3, **characterized in that**, obtaining a picture corresponding to the designated view from the background packages comprises: adjusting the obtained picture so that it is adapted to be displayed in the parent view.

6. The method according to claim 4, **characterized in that**, transparentizing the keyboard view and menu/candidate view further comprises:
configuring display settings of the view so that the view is displayed in a predetermined degree of transparency; or
deploying, respectively, a picture with a preset degree of transparency in each of the keyboard view and/or menu/candidate view.

7. The method according to claim 3, **characterized in that**, each of the background packages contains only one picture adapted to be deployed in the menu/candidate view.

8. The method according to claim 7, **characterized in that**, each of the background packages contains only one picture adapted to be deployed in the keyboard view.

9. The method according to claim 7, **characterized in that**, monitoring the parameter associated with switching the keyboard background and determining whether to trigger a dynamic switching of the keyboard background comprises one or more of:
recording the number of times the keyboard has been invoked, determining whether the number exceeds a predetermined threshold value, and triggering a switching of the keyboard background when the number exceeds the predetermined threshold value; or
monitoring a current system time, comparing it with a time at which the last switching of the keyboard background occurred, and triggering a switching of the keyboard background when the difference therebetween exceeds a predetermined time interval; or
monitoring the current location of a focus and triggering a switching of the keyboard background when the focus is detected to be located in a first designated application or not triggering a switching of the keyboard background when the focus is detected to be located in a second designated application.

10. The method according to claim 7, **characterized in that**, monitoring the parameter associated with switching the keyboard background and determining whether to trigger a dynamic switching of the keyboard background comprises one or more of:
detecting a location currently manipulated by a user and determining whether it is a designated triggering location;
detecting a motion currently made by the user and determining whether it is a designated triggering motion; and
receiving a system message or instruction and determining whether an instruction associated with switching the keyboard background is contained therein.

11. An apparatus for dynamically switching a keyboard background, **characterized in that**, comprising:
a monitoring device, adapted to monitor a parameter associated with switching the keyboard background;
a triggering device, adapted to determine whether to trigger a dynamic switching of the keyboard background based on the associated parameter obtained by the monitoring device and send out a triggering instruction when it is determined to trigger a dynamic switching of the keyboard background; storage device, adapted to store background packages; and
a replacement device, adapted to receive the triggering instruction from the triggering device, obtain an unused picture corresponding to a designated view from a respective background package in the storage device and replace a picture being currently used in the designated view with the unused picture.

12. The device according to claim 11, **characterized in that**, the designated view is a parent view adapted to carry a keyboard view and a menu/candidate view.

13. The device according to claim 12, **characterized in that**, each of the background packages contains only one picture adapted to be deployed in the menu/candidate view.

14. The device according to claim 13, **characterized in that**, each of the background packages contains only one picture adapted to be deployed in the keyboard view.

15. The device according to claim 13, **characterized in that**, the monitoring device is adapted to record a current system time, or obtain the type of an application for which the keyboard is currently invoked based on the current location of a focus, or record the number of times the keyboard has been invoked, or obtain a location currently manipulated by a user or a motion currently made by the user.

16. The device according to claim 13, **characterized in that**, the triggering device is adapted to perform one or more of the following:
determining whether the number of times the keyboard has been invoked exceeds a predetermined threshold value and triggering a switching of the keyboard background when the number exceeds the predetermined threshold value;
comparing the system time with a time at which the last switching of the keyboard background occurred and triggering a switching of the keyboard background when the difference therebetween exceeds a predetermined time interval; and
triggering a switching of the keyboard background when the focus is located in a first designated application or not triggering a switching of the keyboard background when the focus is located in a second designated application.

17. The device according to claim 13, **characterized in that**, the triggering device is adapted to perform one or more of the following:
detecting a location currently manipulated by a user and determining whether it is a designated triggering location;
detecting a motion currently made by the user and determining whether it is a designated triggering motion; and
receiving a system message or instruction and determining whether an instruction associated with switching the keyboard background is contained therein.

18. The device according to claim 13, **characterized in that**, the replacement device comprises a transparentization unit adapted to transparentize the keyboard view and the menu/candidate view carried in the parent view.

19. The device according to claim 13, **characterized in that**, the replacement device comprises a background picture configuration unit adapted to configure the pictures in the background packages so that they are adapted to be displayed in the parent view.

20. The device according to claim 13, **characterized in that**, the replacement device and the storage device are deployed on a remote server, and wherein when the triggering device detects a need for dynamically switching the keyboard background, a triggering instruction is sent to the replacement device deployed on the remote server.
